# EUROPEAN PATENT SPECIFICATION

(11) **EP 2 811 341 B1**
(45) Date of publication and mention of the grant of the patent: **03.05.2017**
(21) Application number: 12867285.4
(22) Date of filing: 19.03.2012
(51) Int. Cl.: G03B 11/00, G02B 7/00, G03B 17/56

(54) **FILTER FRAME FOR DIGITAL CAMERA MADE FROM POLYMER ELASTIC BODY**
FILTERRAHMEN FÜR EINE DIGITALKAMERA AUS EINEM ELASTISCHEN POLYMERKÖRPER
CADRE DE FILTRE POUR APPAREIL PHOTO NUMÉRIQUE CONSTITUÉ DE CORPS ÉLASTIQUE POLYMÈRE

(30) Priority: 31.01.2012 JP 2012017789; 29.02.2012 JP 2012043297
(43) Date of publication of application: 10.12.2014
(73) Proprietor: Marumi Optical Co. Ltd., Kita-Ku Tokyo 114-0014 (JP)
(72) Inventor: KARASAWA, Yutaka, Kamiina-gun, Nagano 399-4601 (JP)
(74) Representative: DREISS Patentanwälte PartG mbB
(86) International application number: PCT/JP2012/057676
(87) International publication number: WO 2013/114635

(56) References cited:
- WO-A2-2008/076399
- DE-U1- 29 521 218
- JP-A- H02 274 448
- JP-A- H06 317 734
- JP-A- S62 140 240
- JP-A- 2008 191 412
- JP-A- 2011 043 653
- US-A- 4 311 364
- US-A- 4 737 017
- US-A- 5 040 011
- US-A1- 2005 243 443
- US-A1- 2011 170 177

## Description

### TECHNICAL FIELD

The invention relates to a digital camera filter frame. In particular, the invention relates to a digital camera filter frame that is produced using a polymer elastic body (i.e., synthetic resin).

The digital camera filter frame is produced by molding a thermosetting resin, a thermoplastic resin, or a composite material that utilizes a synthetic resin (e.g., fiber-reinforced plastic). The digital camera filter frame is characterized in that the digital camera filter frame has a reduced weight as compared with a filter frame made of a metal, ensures excellent water-tightness between the filter frame and a filter lens fitting section, and serves as a buffer to prevent a variation in the optical axis of a camera lens even when the filter frame fitted to the end of the lens barrel of a camera collides with something hard during use, for example.

### BACKGROUND ART

A digital camera filter is fitted to the front side of the lens barrel of a digital camera, and transmits light to an image sensor included in the camera while controlling (e.g., absorbing, transmitting, or changing) the light corresponding to the objective. The digital camera filter mainly includes a filter lens that is formed by an optical glass system, and a filter frame that holds the filter lens.

Patent Document 1 (JP-A-2005-301173) discloses examples of the material and the shape of a known digital camera filter frame. Patent Document 1 discloses a filter outer frame material that is obtained by plating a metal material, followed by black alumite chemical polishing (satin finishing). Specifically, the metal material is an aluminum material.

Patent Document 1 discloses a digital camera filter frame structure with high utility value (e.g., lens protection filter, circular polarizing filter, light intensity reduction filter, cross screen filter (special effect filter), and soft focus filter), and discloses the shape and processing technology necessary for the filter frame.

Patent Document 1 discloses a male thread that is provided on the back side of the filter outer frame, and screwed to the lens barrel of a digital camera, an optical system attachment connection female thread that is provided on the front side of the filter frame, a knurled section for a rotation operation that is formed on the outer circumference of the filter frame, a lens-retaining spring and a filter lens-retaining inward protrusion section for retaining a filter lens, and the like.

A known digital camera filter frame such as that disclosed in Patent Document 1 is formed using aluminum or brass (i.e., metal material). Therefore, a known digital camera filter frame is normally heavy, and increases the load imposed on an autofocus motor.

Since a known digital camera filter frame has a structure in which a filter lens that is formed by an optical glass system is fitted to a metal frame (e.g., aluminum frame), and merely secured (fastened) using a lens-retaining edge or a ring-like retention spring, water-tightness between the filter frame and the filter lens fitting section is poor.

Since a known digital camera filter frame that is made of a metal (i.e., a filter having a filter frame made of a metal) is normally fitted to the front side of the lens barrel of a digital camera, an impact suffered by the filter frame when the filter frame collides with something hard is transmitted directly to the lens barrel of the digital camera through the filter frame, and the optical axis of the lens barrel of the camera lens varies. A solution to this problem has been desired.

### RELATED-ART DOCUMENT

### PATENT DOCUMENT

Patent Document 1: JP-A-2005-301173

### SUMMARY OF THE INVENTION

### TECHNICAL PROBLEM

An object of the invention is to reduce the load imposed on an autofocus motor provided in the main body of a digital camera by reducing the weight of various filters that are fitted to the front side of the lens barrel of the digital camera.

A known digital camera filter frame has a structure in which a filter lens that formed by an optical glass system is fitted to a metal frame (e.g., aluminum frame), and merely secured (fastened) using a lens-retaining edge or a ring-like retention spring, and has a problem in which water-tightness between the filter frame and the filter lens fitting section is poor. Another object of the invention is to solve this problem. US 5 040 011 A discloses a digital camera filter frame with features of the preamble of claim 1.

When a digital camera filter frame is made of a metal, an impact suffered by the filter frame fitted to the front side of the lens barrel of a digital camera when the filter frame collides with something hard is transmitted directly to the lens barrel of the digital camera, and the optical axis of the lens barrel of the camera lens varies. A further object of the invention is to solve this problem.

### SOLUTION TO PROBLEM

Several aspects of the invention provide a filter frame according to the features of claim 1.

The digital camera filter frame may be produced by molding the polymer elastic body to produce a ring-like filter frame main body, forming a filter lens-retaining inward protrusion section (lens-retaining inward protrusion section) and a lens fitting section on the inner surface of the ring-like filter frame main body, fitting a filter lens to the lens-retaining inward protrusion section and the lens fitting section, and plastically deforming the end of the peripheral edge section of the lens fitting section by thermal caulking to secure the filter lens on the ring-like filter frame main body.

The ring-like filter frame main body may be produced by molding a thermosetting resin, a thermoplastic resin, or a composite material that utilizes a synthetic resin (e.g., fiber-reinforced plastic) as the polymer elastic body, and a polymer elastic body that exhibits relatively high elasticity may be selected as the polymer elastic body.

The parts that form the ring-like filter frame main body may be respectively produced by molding a material arbitrarily selected from a thermosetting resin, a thermoplastic resin, and a composite material that utilizes a synthetic resin (e.g., fiber-reinforced plastic), and secured (coupled) by thermal caulking, ultrasonic welding, and bonding using an adhesive to produce the filter frame.

The ring-like filter frame main body may be produced by molding a thermoplastic resin or a composite material that utilizes a synthetic resin (e.g., fiber-reinforced plastic) as the polymer elastic body, and a polymer elastic body that exhibits moderate elasticity may be selected as the polymer elastic body (i.e., more specific solution).

The ring-like filter frame main body that is produced by molding a thermoplastic resin or a composite material that utilizes a synthetic resin (e.g., fiber-reinforced plastic) as the polymer elastic body, may include a lens-retaining inward protrusion section and a lens fitting section for the filter lens that are formed on the inner surface of the ring-like filter frame main body, the filter lens that is fitted from the back side to the lens-retaining inward protrusion section so that the circumferential edge of the filter lens comes in contact with the lens-retaining inward protrusion section, and a lens-retaining ring that is fitted to the back side of the filter lens, and can be pressure-welded to the edge of the lens fitting section by ultrasonic welding, and the filter lens may be secured on the ring-like filter frame main body via the lens-retaining inward protrusion section and the lens-retaining ring.

The lens-retaining ring that can be welded to the edge of the lens fitting section by ultrasonic welding may include a lens-retaining ring that has a contact section that comes in contact with the circumferential edge of the filter lens, and a welding ring section that protrudes from the lens-retaining ring, and the end of the welding ring section may form a welding allowance (i.e., efficient configuration).

A contact section that forms a circumferential edge section may respectively be formed on the lens-retaining inward protrusion section of the filter frame main body and the contact section of the lens-retaining ring with the filter lens, an irregular streak-like protrusion that is formed along a circumferential direction may be provided to each contact section, and the irregular streak-like protrusions may hold the filter lens when the lens-retaining ring is pressure-welded to the lens-retaining inward protrusion section by ultrasonic welding to improve water-tightness between the lens-retaining ring and the filter lens, and between the filter lens and the lens-retaining inward protrusion section.

### ADVANTAGEOUS EFFECTS OF THE INVENTION

Several aspects of the invention thus provide a ring-like filter frame according to the features of claim 1. Specifically, several aspects of the invention thus provide a digital camera filter frame that is formed of a polymer elastic body, and produced by molding the polymer elastic body to produce a ring-like filter frame, forming a lens-retaining inward protrusion section and a lens fitting section on the inner surface of the ring-like filter frame, fitting a filter lens to the lens-retaining inward protrusion section and the lens fitting section, and plastically deforming the end of the peripheral edge section of the lens fitting section by thermal caulking to secure the filter lens on the ring-like filter frame. The filter frame according to the invention can reduce the weight of a filter that is fitted to the front side of the lens barrel of a digital camera as compared with a known filter frame produced using a metal material (e.g., aluminum), and can significantly reduce the load imposed on an autofocus motor provided in the main body of the digital camera.

Since the ring-like filter frame main body is produced by molding the polymer elastic body that exhibits relatively high elasticity (e.g., a thermosetting resin, a thermoplastic resin, or a composite material that utilizes a synthetic resin (e.g., fiber-reinforced plastic)), an impact suffered by the ring-like filter frame fitted to the front side of the lens barrel of the digital camera when the filter frame collides with something hard can be buffered by the elasticity of the filter frame (i.e., is not transmitted to the lens barrel), and a situation in which the optical axis of the lens barrel varies can be prevented.

One aspect can provide a digital camera filter frame wherein a contact section that forms a circumferential edge section is respectively formed on the lens-retaining inward protrusion section formed on the filter frame main body and the contact section of the lens-retaining ring with the filter lens, the irregular streak-like protrusion that is formed along the circumferential direction is provided to each contact section, and the irregular streak-like protrusions hold the filter lens when the lens-retaining ring is pressure-welded to the lens-retaining inward protrusion section by ultrasonic welding to improve water-tightness between the lens-retaining ring and the filter lens, and between the filter lens and the lens-retaining inward protrusion section.

Since the filter frame according to several aspects of the invention is produced by molding the polymer elastic body (e.g., a thermosetting resin, a thermoplastic resin, or a composite material that utilizes a synthetic resin (e.g., fiber-reinforced plastic)), the filter frame can be mass-produced, and the production cost can be significantly reduced.

### BRIEF DESCRIPTION OF DRAWINGS

FIG. 1 is a view illustrating a state when a filter frame according to the invention is fitted.
FIG. 2 is a cross-sectional view illustrating the main part of a filter frame according to first and second comparative example not part of the invention.
FIG. 3A is an enlarged view (assembly explanatory diagram) illustrating the section enclosed by the line A-A in FIG. 2, and FIG. 3B is an enlarged view illustrating the section enclosed by the line A-A in FIG. 2 after completion of assembly (first example).
FIG. 4 is an assembly diagram illustrating a second comparative example not part of the invention.
FIG. 5 is a cross-sectional view illustrating the main part of a filter frame according to the invention.
FIG. 6A is an enlarged view (assembly explanatory diagram) illustrating the section enclosed by the line B-B in FIG. 5, and FIG. 6B is an enlarged view illustrating the section enclosed by the line B-B in FIG. 5 after completion of assembly.
FIG. 7A is an enlarged view (assembly explanatory diagram) illustrating the section enclosed by the line B-B in FIG. 5, and FIG. 7B is an enlarged view illustrating the section enclosed by the line B-B in FIG. 5 after completion of assembly.
FIG. 8A is an enlarged view (assembly explanatory diagram) illustrating the section enclosed by the line B-B in FIG. 5, and FIG. 8B is an enlarged view illustrating the section enclosed by the line B-B in FIG. 5 after completion of assembly.
FIG. 9A is an enlarged view illustrating a lens-retaining inward protrusion, and FIG. 9B is an enlarged view illustrating a lens-retaining ring.

### DESCRIPTION OF EMBODIMENTS

The invention relates to a digital camera filter frame. In particular, the invention relates to a digital camera filter frame that is produced using a polymer elastic body (i.e., synthetic resin).

The term "polymer elastic body" used herein refers to a thermosetting resin, a thermoplastic resin, a composite material that utilizes a synthetic resin (e.g., fiber-reinforced plastic), and the like.

The term "thermosetting resin" used herein refers to a resin that polymerizes (i.e., cures) when heated to form a polymer network structure, and does not return to the original state. Examples of the thermosetting resin include a phenol resin (PF), an epoxy resin (EP), a melamine resin (MF), a urea resin (UF), an unsaturated polyester resin (UP), a polyurethane (PUR), a thermosetting polyimide (PI), and the like.

The term "thermoplastic resin" used herein refers to a resin that softens when heated to the glass transition temperature or the melting point, and can be molded into the desired shape. Since it is normally difficult to machine (e.g., cut or grind) the thermoplastic resin, injection molding (that pours the thermoplastic resin that has softened by heating into a die, and cools the thermoplastic resin to effect solidification) and the like have been widely used. The thermoplastic resin is classified into a commodity plastic, an engineering plastic, a super-engineering plastic, and the like depending on the application.

Examples of the commodity plastic that may be used in connection with the invention include polyethylene (PE), polypropylene (PP), polyvinyl chloride (PVC), polystyrene (PS), polytetrafluoroethylene (PTFE), an ABS resin, an acrylic resin, and the like.

Examples of the engineering plastic that may be used in connection with the invention include a polyamide (PA), polyacetal (POM), a polycarbonate (PC), polybutylene terephthalate (PBT), polyethylene terephthalate (PET), glass fiber-reinforced polyethylene terephthalate (GF-PET), and the like.

Examples of the super-engineering plastic that may be used in connection with the invention include polyphenylene sulfide (PPS), polytetrafluoroethylene (PTFE), polysulfone (PSF), polyethersulfone (PES), polyarylate (PAR), a liquid crystal polymer (LCP), a thermoplastic polyimide (PI), polyamideimide (PAI), and the like.

Examples of the composite material that utilizes a synthetic resin (e.g., fiber-reinforced plastic) that may be used in connection with the invention include a glass fiber-reinforced plastic (GFRP), a carbon fiber-reinforced plastic (CFRP), and the like.

The invention reduces the load imposed on an autofocus motor provided in the main body of a digital camera by reducing the weight of a filter that is fitted to the front side of the lens barrel of the digital camera.

When the digital camera filter frame is made of a metal, an impact suffered by the filter frame fitted to the front side of the lens barrel of the digital camera when the filter frame collides with something hard is transmitted directly to the lens barrel of the digital camera, and the optical axis of the lens barrel of the camera lens varies. The invention also solves this problem.It can be provided a digital camera filter frame wherein a contact section that forms a circumferential edge section is respectively formed on a lens-retaining inward protrusion section formed on the filter frame main body and the contact section of a lens-retaining ring with the filter lens, an irregular streak-like protrusion that is formed along the circumferential direction is provided to each contact section, and the irregular streak-like protrusions hold the filter lens when the lens-retaining ring is pressure-welded to the lens-retaining inward protrusion section by ultrasonic welding to improve water-tightness between the lens-retaining ring and the filter lens, and between the filter lens and the lens-retaining inward protrusion section.

Since the filter frame is produced by molding the polymer elastic body (e.g., a thermosetting resin, a thermoplastic resin, or a composite material that utilizes a synthetic resin (e.g., fiber-reinforced plastic)), the filter frame can be mass-produced, and the production cost can be significantly reduced.

It is preferable that the filter frame that is fitted to the front side of the lens barrel of a digital camera to control light be produced as a ring-like filter frame main body by molding the polymer elastic body, and a filter lens having a specific effect be fitted to the ring-like filter frame main body.

It is preferable that the filter frame be a digital camera filter frame formed of the polymer elastic body that is produced by molding the polymer elastic body to produce a ring-like filter frame main body, forming a filter lens-retaining inward protrusion section (lens-retaining inward protrusion section) and a lens fitting section to form the inner surface of the ring-like filter frame main body, fitting a filter lens to the lens-retaining inward protrusion section and the lens fitting section, and plastically deforming the end of the peripheral edge section of the lens fitting section by thermal caulking to secure the filter lens on the ring-like filter frame main body.

It is preferable that the ring-like filter frame main body (i.e., a digital camera filter frame formed of a polymer elastic body) be produced by molding a thermosetting resin, a thermoplastic resin, or a composite material that utilizes a synthetic resin (e.g., fiber-reinforced plastic) as the polymer elastic body, a polymer elastic body that exhibits relatively high elasticity being selected as the polymer elastic body.

It is preferable that the parts that form the ring-like filter frame main body (i.e., a digital camera filter frame formed of a polymer elastic body) be respectively produced by molding a material arbitrarily selected from a thermosetting resin, a thermoplastic resin, and a composite material that utilizes a synthetic resin (e.g., fiber-reinforced plastic), and secured (coupled) by thermal caulking, ultrasonic welding, and bonding using an adhesive to produce the filter frame.

It is particularly preferable that the ring-like filter frame main body (i.e., a digital camera filter frame formed of a polymer elastic body) be produced by molding a thermoplastic resin or a composite material that utilizes a synthetic resin (e.g., fiber-reinforced plastic) as the polymer elastic body, a polymer elastic body that exhibits moderate elasticity being selected as the polymer elastic body.

It is preferable that the digital camera filter frame formed of a polymer elastic body include a lens-retaining inward protrusion section and a lens fitting section for the filter lens that are formed on the inner surface of the ring-like filter frame main body, the filter lens that is fitted from the back side to the lens-retaining inward protrusion section so that the circumferential edge of the filter lens comes in contact with the lens-retaining inward protrusion section, and a lens-retaining ring that is fitted to the back side of the filter lens, and can be pressure-welded to the edge of the lens fitting section by ultrasonic welding, wherein the filter lens is secured on the ring-like filter frame main body via the lens-retaining inward protrusion section and the lens-retaining ring.

It is also preferable that the digital camera filter frame formed of a polymer elastic body include a lens-retaining inward protrusion section and a lens fitting section for the filter lens that are formed on the inner surface of the ring-like filter frame main body, the filter lens that is fitted from the front side to the lens-retaining inward protrusion section so that a circumferential edge of the filter lens comes in contact with the lens-retaining inward protrusion section, and a lens-retaining ring that is fitted to the front side of the filter lens, and can be pressure-welded to the edge of the lens fitting section by ultrasonic welding, wherein the filter lens is secured on the ring-like filter frame main body via the lens-retaining inward protrusion section and the lens-retaining ring.

It is preferable that the lens-retaining ring that can be welded to the edge of the lens fitting section by ultrasonic welding include a lens-retaining ring that has a contact section that comes in contact with the circumferential edge of the filter lens, and a welding ring section that protrudes from the lens-retaining ring, and the end of the welding ring section form a welding allowance.

It is preferable that a contact section that forms a circumferential edge section is respectively formed on the lens-retaining inward protrusion section of the filter frame main body and the contact section of the lens-retaining ring with the filter lens, an irregular streak-like protrusion that is formed along a circumferential direction be provided to each contact section, and the irregular streak-like protrusions hold the filter lens when the lens-retaining ring is pressure-welded to the lens-retaining inward protrusion section by ultrasonic welding to improve water-tightness between the lens-retaining ring and the filter lens, and between the filter lens and the lens-retaining inward protrusion section.

### First comparative example

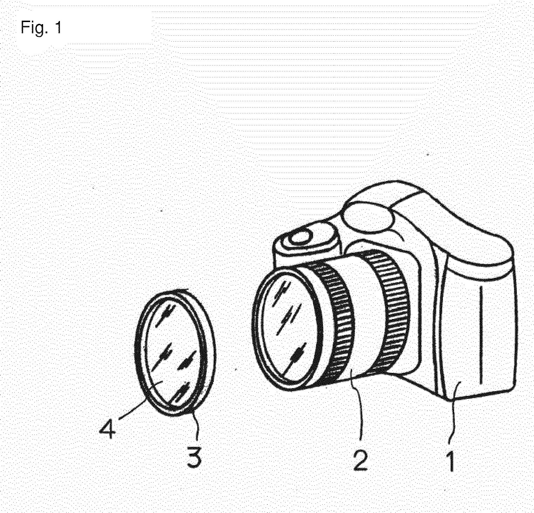

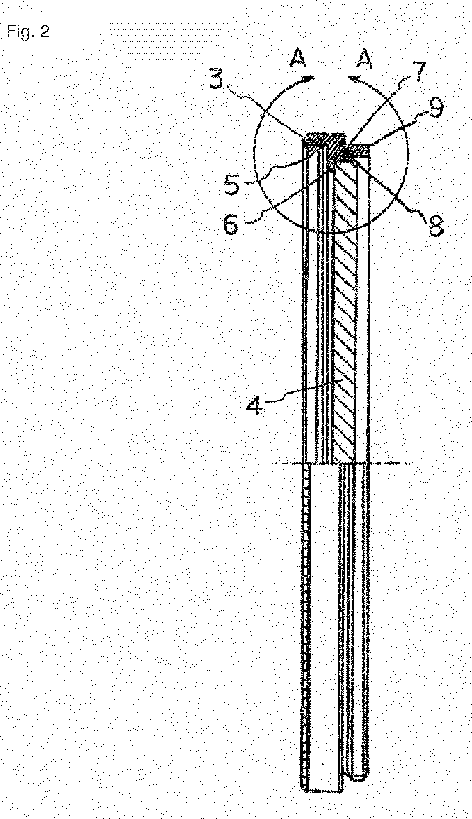

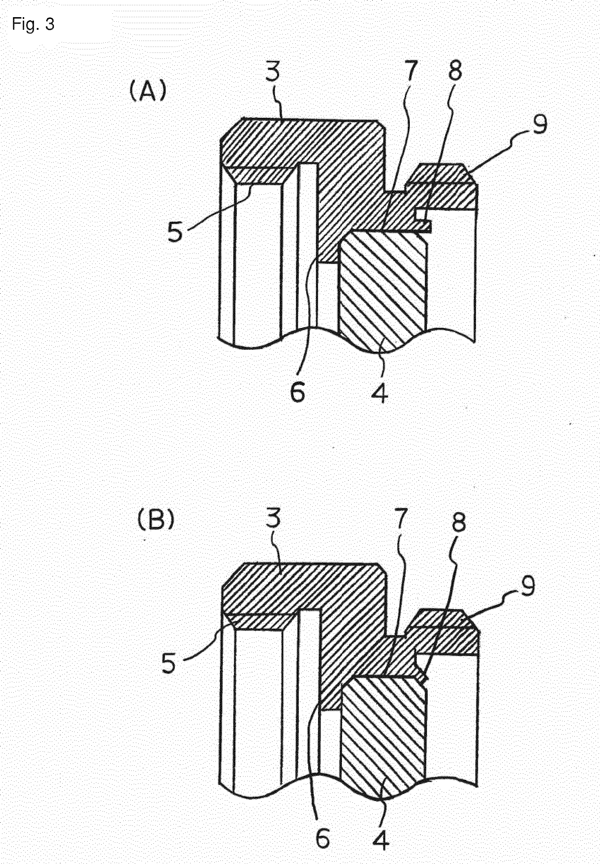

FIGS. 1 to 3B illustrate a first comparative example not part of the invention. FIG. 1 is a view illustrating a state when a filter frame according to the first comparative example is fitted, FIG. 2 is a cross-sectional view illustrating the main part of the filter frame according to the first comparative example, and FIGS. 3A and 3B are enlarged views (assembly explanatory diagrams) illustrating the section enclosed by the line A-A in FIG. 2.

In FIG. 1, reference sign 1 indicates the main body of a digital single-lens reflex camera, reference sign 2 indicates a lens barrel, and reference sign 3 indicates a digital camera filter frame main body formed of a polymer elastic body. A digital camera filter mainly includes a filter lens 4 that is formed by an optical glass system, and the filter frame main body 3 that has a ring-like shape and holds the filter lens 4. The filter frame main body 3 is fitted to the front side of the lens barrel 2 of the digital camera, and transmits light to an image sensor included in the camera while controlling light (e.g., absorbing, transmitting, or changing light) via the filter lens 4 corresponding to the objective.

FIG. 2 is a cross-sectional view illustrating the main part of the filter frame main body 3. The filter frame main body 3 includes a female thread 5 to which another optical system attachment is screwed (fitted), a lens-retaining inward protrusion section 6, a lens fitting section 7 to which the filter lens 4 is fitted, a peripheral edge section 8 of the lens fitting section 7, and a male thread 9 that is screwed and fitted to the lens barrel 2 (sequentially from the front side). The female thread 5, the lens-retaining inward protrusion section 6, the lens fitting section 7, the peripheral edge section 8, and the male thread 9 are obtained by molding the polymer elastic body to form the ring-like filter frame main body 3.

FIGS. 3A and 3B are enlarged views (assembly explanatory diagrams) illustrating the section enclosed by the line A-A in FIG. 2. As illustrated in FIGS. 3A and 3B, the polymer elastic body is molded to obtain the ring-like filter frame main body 3. The lens-retaining inward protrusion section 6 and the lens fitting section 7 are formed on the inner surface of the ring-like filter frame main body 3. After fitting the filter lens 4 to the lens-retaining inward protrusion section 6 and the lens fitting section 7 (see FIG. 3A), the peripheral edge section 8 of the lens fitting section 7 is plastically deformed by thermal caulking to secure the filter lens 4 on the ring-like filter frame main body 3 (see FIG. 3B). In the first comparative example, the female thread 5 can be molded using a forcible removal die on which a stopper protrudes, and the male thread 9 can be molded using a split die.

The ring-like filter frame main body 3 according to the first comparative example is thus produced by molding the polymer elastic body. Since the ring-like filter frame main body 3 is produced by molding the polymer elastic body that is a thermosetting resin, a thermoplastic resin, or a composite material that utilizes a synthetic resin (e.g., fiber-reinforced plastic), the filter frame main body 3 functions as a buffer by arbitrarily selecting a polymer elastic body that exhibits relatively high elasticity. Moreover, it is possible to produce the filter frame main body 3 having a significantly reduced weight as compared with a filter frame made of a metal.

### Second comparative example

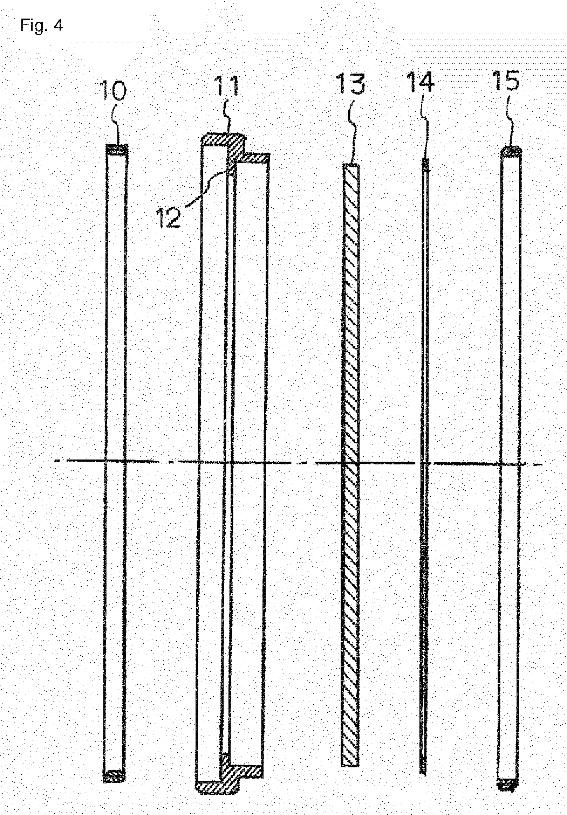

FIG. 4 is an assembly diagram illustrating a second comparative example not part of the invention. In FIG. 4, reference sign 10 indicates a female thread part, reference sign 11 indicates a filter outer frame that has a filter lens-retaining inward protrusion section 12 on the inner side thereof, reference sign 13 indicates a filter lens, reference sign 14 indicates a filter lens-retaining ring, and reference sign 15 indicates a male thread part. The female thread part 10, the filter outer frame 11, the filter lens-retaining ring 14, and the male thread part 15 are respectively produced using a material arbitrarily selected from a thermosetting resin, a thermoplastic resin, and a composite material that utilizes a synthetic resin (e.g., fiber-reinforced plastic). The female thread part 10, the filter outer circumferential frame 11, the filter lens-retaining ring 14, and the male thread part 15 are secured and coupled by thermal caulking, ultrasonic welding, and bonding using an adhesive to produce a digital camera filter frame formed of a polymer elastic body.

The second comparative example thus provides a ring-like filter frame which is produced by molding a polymer elastic body and to which a filter lens having a specific effect is fitted. Specifically, the second comparative example provides a digital camera filter frame that is formed of a polymer elastic body, and produced by molding the polymer elastic body to produce a ring-like filter frame, forming a lens-retaining inward protrusion section and a lens fitting section on the inner surface of the ring-like filter frame, fitting a filter lens to the lens-retaining inward protrusion section and the lens fitting section, and plastically deforming the end of the peripheral edge section of the lens fitting section by thermal caulking to secure the filter lens on the ring-like filter frame. The filter frame according to the second comparative example can reduce the weight of a filter that is fitted to the front side of the lens barrel of a digital camera as compared with a known filter frame produced using a metal material (e.g., aluminum), and can significantly reduce the load imposed on an autofocus motor provided in the main body of the digital camera.

Since the ring-like filter frame according to the second comparative example is produced by molding the polymer elastic body that exhibits relatively high elasticity (e.g., a thermosetting resin, a thermoplastic resin, or a composite material that utilizes a synthetic resin (e.g., fiber-reinforced plastic)), an impact suffered by the ring-like filter frame fitted to the front side of the lens barrel of the digital camera when the filter frame collides with something hard during use can be buffered by the elasticity of the filter frame (i.e., is not transmitted to the lens barrel), and a situation in which the optical axis of the lens barrel varies can be prevented.

Since the filter frame according to the second comparative example is produced by molding the polymer elastic body (e.g., a thermosetting resin, a thermoplastic resin, or a composite material that utilizes a synthetic resin (e.g., fiber-reinforced plastic)), the filter frame can be mass-produced, and the production cost can be significantly reduced.

### First embodiment

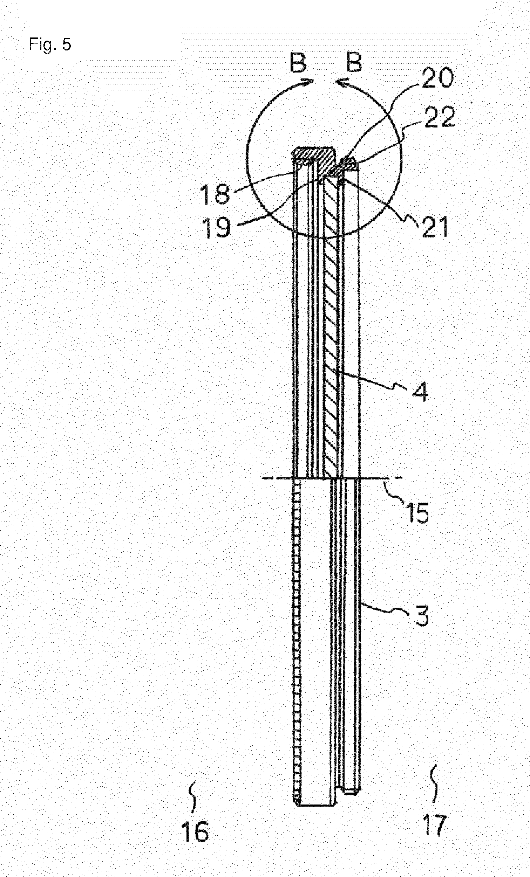

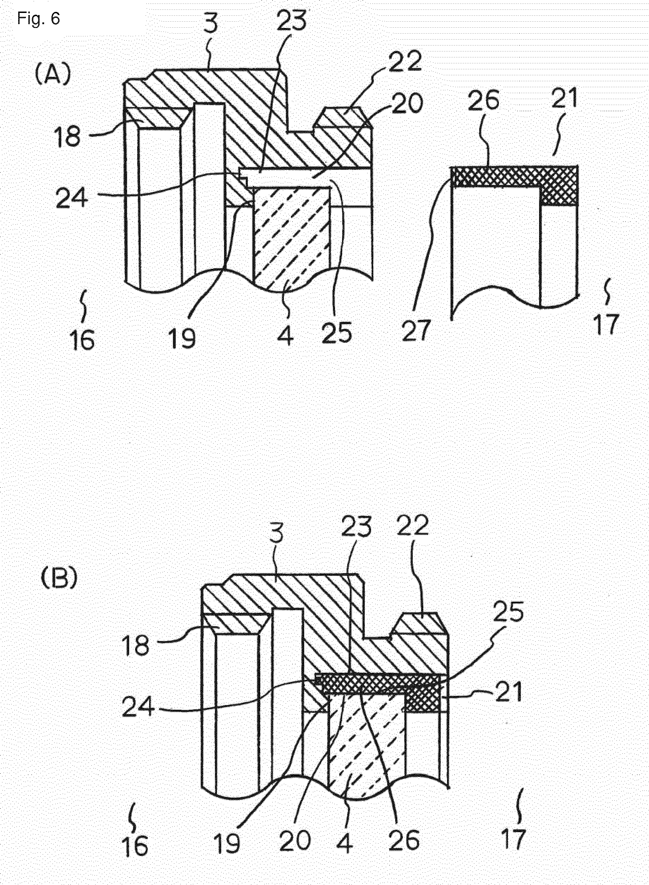

FIGS. 1, 5, 6A, and 6B illustrate an first embodiment of the invention. FIG. 1 is a view illustrating a state when a filter frame according to the first embodiment of the invention is fitted, FIG. 5 is a cross-sectional view illustrating the main part of the filter frame according to the first embodiment of the invention, and FIGS. 6A and 6B are enlarged views (assembly explanatory diagrams) illustrating the section enclosed by the line B-B in FIG. 5.

In FIG. 1, reference sign 1 indicates the main body of a digital camera, reference sign 2 indicates a lens barrel, and reference sign 3 indicates a digital camera filter frame main body formed of a thermoplastic resin or a composite material (e.g., fiber-reinforced plastic). A digital camera filter mainly includes a filter lens 4 that is formed by an optical glass system, and the filter frame main body 3 that has a ring-like shape and holds the filter lens 4. The filter frame main body 3 is fitted to the front side of the lens barrel 2 of the digital camera, and transmits light to an image sensor included in the camera while controlling light (e.g., absorbing, transmitting, or changing light) via the filter lens 4 corresponding to the objective.

FIG. 5 is a cross-sectional view illustrating the main part of the filter frame main body 3. In FIG. 5, reference sign 3 indicates the filter frame main body, reference sign 4 indicates the filter lens, reference sign 15 indicates the optical axis of the filter lens, reference sign 16 indicates the front side of the filter lens (i.e., the light-incident side), and reference sign 17 indicates the back side of the filter lens (i.e., the side fitted to the lens barrel). The filter frame main body 3 includes a female thread 18 to which another optical system attachment is screwed (fitted), a lens-retaining inward protrusion section 19, a lens fitting section 20 to which the filter lens 4 is fitted, a lens-retaining ring 21, and a male thread 22 that is screwed and fitted to the lens barrel 2 (sequentially from the front side 16 in FIG. 5). The female thread 18, the lens-retaining inward protrusion section 19, the lens fitting section 20, the lens-retaining ring 21, and the male thread 22 are produced by molding a thermoplastic resin or a composite material that utilizes a synthetic resin (e.g., fiber-reinforced plastic) having moderate elasticity to produce the ring-like filter frame main body 3. The filter lens 4 having a specific effect is fitted to the ring-like filter frame main body 3.

FIG. 6A is an enlarged view (assembly explanatory diagram) illustrating the section enclosed by the line B-B in FIG. 5, and FIG. 6B is an enlarged view illustrating the section enclosed by the line B-B in FIG. 5 after completion of assembly. As illustrated in FIG. 6A, a thermoplastic resin or a composite material that utilizes a synthetic resin (e.g., fiber-reinforced plastic) having moderate elasticity is molded to obtain the ring-like filter frame main body 3. The lens-holding inward protrusion section 19 and the lens fitting section 20 are formed on the inner surface of the ring-like filter frame main body 3. After fitting the filter lens 4 to the lens-holding inward protrusion section 19 and the lens fitting section 20 (see FIG. 6A), a burr groove 24 and a welding ring fitting groove 25 are formed in a peripheral edge section 23 of the lens fitting section 20.

Reference sign 21 indicates a lens-retaining ring. A welding ring section 26 in the shape of a protrusion is formed on the lens-retaining ring 21. A welding allowance 27 is provided to the edge of the welding ring section 26.

In the first embodiment, the female thread 18 can be molded using a forcible removal die on which a stopper protrudes, and the male thread 22 can be molded using a split die.

FIG. 6B illustrates a state in which the lens-retaining ring 21 has been fitted to the lens fitting section 20, and the lens-retaining ring 21 has been ultrasonic-welded to the filter frame main body 3 using an ultrasonic welder. In FIG. 6B, the filter lens 4 comes in pressure contact with the lens-retaining inward protrusion section 19 that forms the inner surface of the filter frame main body 3 due to the lens-retaining ring 21 (i.e., the filter lens 4 is held between the lens-retaining inward protrusion section 19 and the lens-retaining ring 21). Since the welding allowance 27 of the welding ring section 26 of the lens-retaining ring 21 has been melted during welding, and part of the welding allowance 27 is situated in the burr groove 24, the filter lens 4 is firmly held between the lens-retaining inward protrusion section 19 and the lens-retaining ring 21. In the example illustrated in FIG. 6B, since the edge of the filter lens 4 serves as a stopper during pressure welding, and the lens-retaining ring 21 is pressure-welded to the lens-retaining inward protrusion section 19 by ultrasonic welding, excellent water-tightness can be achieved between the lens-retaining ring 21 and the filter lens 4, and between the filter lens 4 and the lens-retaining inward protrusion section 19.

The first embodiment of the invention thus provides the ring-like digital camera filter frame main body 3 that is fitted to the front side of the lens barrel 2 of the digital camera to control light, and is produced by molding a thermoplastic resin or a composite resin (e.g., fiber-reinforced plastic) having moderate elasticity, the filter lens 4 having a specific effect being fitted to the ring-like filter frame main body 3.

The first embodiment of the invention provides a digital camera filter frame that includes the ring-like filter frame main body 3 that is fitted to the front side of the lens barrel 2 of the digital camera to control light, and is produced by molding a thermoplastic resin or a composite resin (e.g., fiber-reinforced plastic) having moderate elasticity, the filter lens 4 that is fitted (from the back side 17) to the lens-retaining inward protrusion section 19 and the lens fitting section 20 formed on the inner surface of the ring-like filter frame main body 3 so that the circumferential edge of the filter lens 4 comes in contact with the lens-retaining inward protrusion section 19, and the lens-retaining ring 21 that is fitted to the back side 17 of the filter lens 4, and can be pressure-welded to the edge of the lens fitting section 20 by ultrasonic welding, wherein the filter lens 4 is secured on the ring-like filter frame main body 3 via the lens-retaining inward protrusion section 19 and the lens-retaining ring 21.

### Fourth embodiment

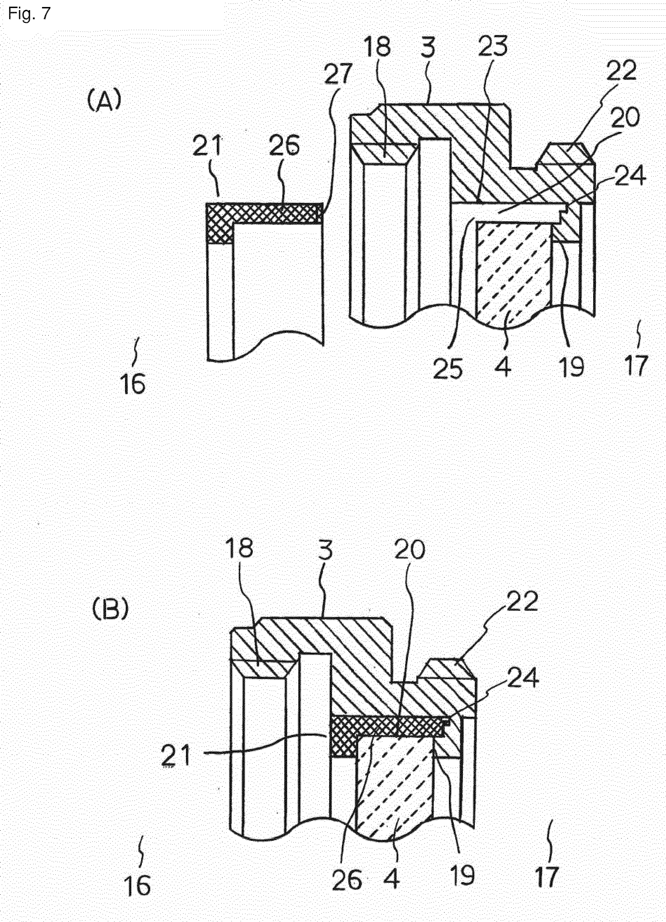

FIGS. 7A and 7B illustrate a second embodiment of the invention. FIG. 7A is an enlarged view (assembly explanatory diagram) illustrating the section enclosed by the line B-B in FIG. 5, and FIG. 7B is an enlarged view illustrating the section enclosed by the line B-B in FIG. 5 after completion of assembly. In FIGS. 7A and 7B, reference sign 3 indicates a ring-like filter frame main body, reference sign 4 indicates a filter lens, reference sign 16 indicates the front side of the filter lens (i.e., the light-incident side), and reference sign 17 indicates the back side of the filter lens (i.e., the side that is fitted to the lens barrel). Reference sign 18 indicates a female thread, reference sign 19 indicates a lens-retaining inward protrusion section, reference sign 20 indicates a lens fitting section, reference sign 21 indicates a lens-retaining ring, reference sign 22 indicates a male thread, reference sign 23 indicates a circumferential edge, reference sign 24 indicates a burr groove, reference sign 25 indicates a welding ring fitting groove, reference sign 26 indicates a welding ring, and reference sign 27 indicates a welding allowance.

In the second embodiment, the female thread 18 can be molded using a forcible removal die on which a stopper protrudes, and the male thread 22 can be molded using a split die.

In the second embodiment, the lens-retaining inward protrusion section 19 is provided on the back side 17 of the filter frame main body 3, the filter lens 4 that comes in contact with the lens-retaining inward protrusion section 19 is fitted from the front side 16 (i.e., the light-incident side), the lens-retaining ring 21 is fitted from the front side 16 (i.e., the light-incident side), and the filter lens 4 is secured on the inner surface of the filter frame main body 3 by ultrasonic welding (see FIG. 7A).

The second embodiment of the invention thus provides a digital camera filter frame that includes the ring-like filter frame main body 3 that is fitted to the front side of the lens barrel 2 (see FIG. 1) of the digital camera to control light, and is produced by molding a thermoplastic resin or a composite resin (e.g., fiber-reinforced plastic) having moderate elasticity, the filter lens 4 that is fitted (from the front side 16) to the lens-retaining inward protrusion section 19 and the lens fitting section 20 formed on the inner surface of the ring-like filter frame main body 3 so that the circumferential edge 23 of the filter lens 4 comes in contact with the lens-retaining inward protrusion section 19, and the lens-retaining ring 21 that is fitted to the front side 16 of the filter lens 4, and can be pressure-welded to the edge of the lens fitting section 20 by ultrasonic welding, wherein the filter lens 4 is secured on the ring-like filter frame main body 3 via the lens-retaining inward protrusion section 19 and the lens-retaining ring 21 (see FIG. 7B).

### Third comparative example

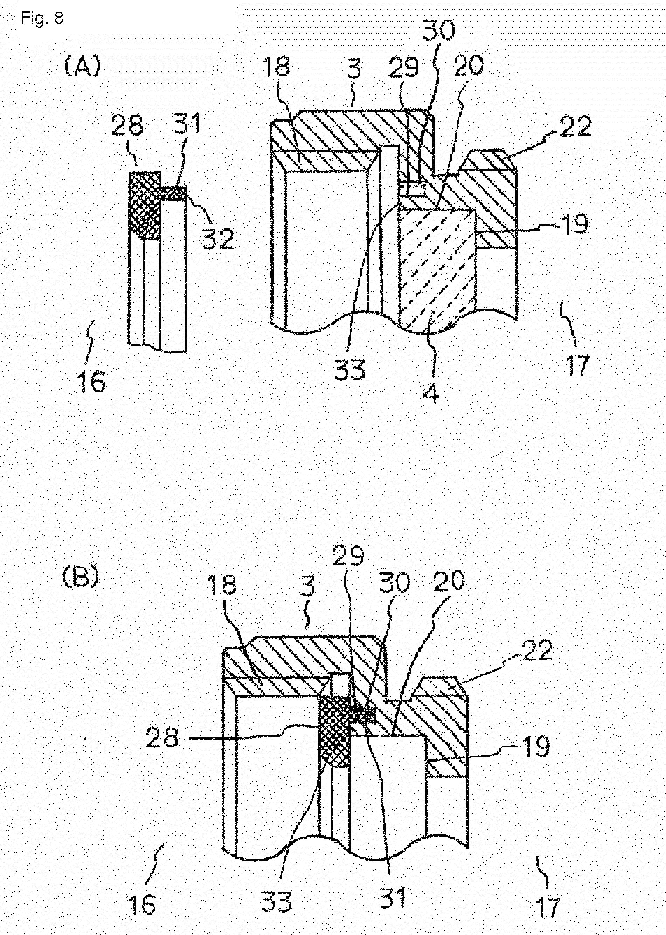

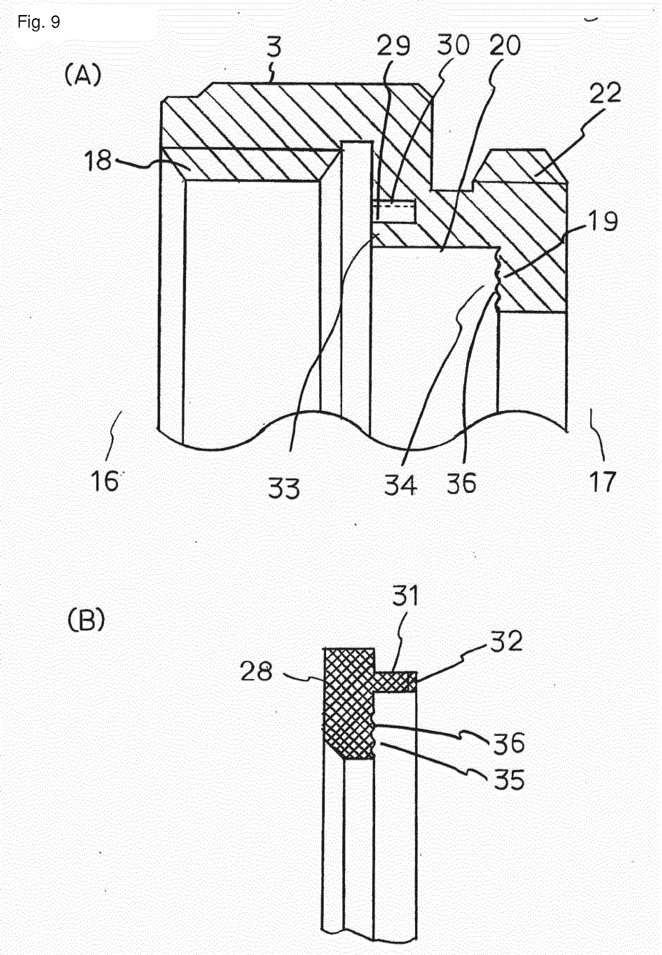

FIGS. 8A to 9B illustrate a third comparative example not part of the invention. FIG. 8A is an enlarged view (assembly explanatory diagram) illustrating the section enclosed by the line B-B in FIG. 5, FIG. 8B is an enlarged view illustrating the section enclosed by the line B-B in FIG. 5 after completion of assembly, FIG. 9A is an enlarged view illustrating a lens-retaining inward protrusion section according to the third comparative example not part of the invention, and FIG. 9B is an enlarged view illustrating a lens-retaining ring according to the third comparative example not part of the invention. In FIGS. 8A and 8B, reference sign 3 indicates a ring-like filter frame main body, reference sign 4 indicates a filter lens, reference sign 16 indicates the front side of the filter lens (i.e., the light-incident side), and reference sign 17 indicates the back side of the filter lens (i.e., the side that is fitted to the lens barrel). Reference sign 18 indicates a female thread, reference sign 19 indicates a lens-retaining inward protrusion section, reference sign 20 indicates a lens fitting section, reference sign 28 indicates a lens-retaining ring, reference sign 22 indicates a male thread, reference sign 29 indicates a welding ring fitting groove that is formed so as not to come in contact with the circumferential edge of the filter lens 4, reference sign 30 indicates a burr groove that is provided in the outer circumference of the welding ring fitting groove, reference sign 31 indicates a welding ring that is integrated with the lens-retaining ring 28, reference sign 32 indicates a welding allowance that is provided at the end of the welding ring, and reference sign 33 indicates a welding stopper.

In the third example, the lens-retaining inward protrusion section 19 is provided on the back side 17 of the filter frame main body 3, the filter lens 4 that comes in contact with the lens-retaining inward protrusion section 19 is fitted from the front side 16 (i.e., the light-incident side), the lens-retaining ring 28 is fitted from the front side 16 (i.e., the light-incident side), and the filter lens 4 is secured on the inner surface of the filter frame main body 3 by ultrasonic welding (see FIG. 8A). The welding ring fitting groove 29 to which the lens-retaining ring 28 that is heated is fitted does not come in contact with the circumferential edge of the filter lens 4 (i.e., is formed as an independent groove).

The third comparative example not part of the invention thus provides a digital camera filter frame that includes the ring-like filter frame main body 3 that is fitted to the front side of the lens barrel 2 (see FIG. 1) of the digital camera to control light, and is produced by molding a thermoplastic resin or a composite resin (e.g., fiber-reinforced plastic) having moderate elasticity, the filter lens 4 that is fitted (from the front side 16) to the lens-retaining inward protrusion section 19 and the lens fitting section 20 formed on the inner surface of the ring-like filter frame main body 3 so that the circumferential edge of the filter lens 4 comes in contact with the lens-retaining inward protrusion section 19, and the lens-retaining ring 28 that is fitted to the front side 16 of the filter lens 4, and can be pressure-welded to the edge of the lens fitting section 20 by ultrasonic welding, wherein the filter lens 4 is secured on the ring-like filter frame main body 3 via the lens-retaining inward protrusion section 19 and the lens-retaining ring 28 (see FIG. 8B).

FIGS. 9A and 9B illustrate an application example of the third comparative example not part of the invention. Since the lens-retaining ring 28 is pressure-welded to the lens-retaining inward protrusion section 19 by ultrasonic welding, excellent water-tightness is achieved between the lens-retaining ring 28 and the filter lens 4, and between the filter lens 4 and the lens-retaining inward protrusion section 19. However, it has been desired to improve water-tightness between the filter lens 4 and the filter frame main body 3 so that the digital camera can be used for waterside shooting, shooting in the rain, or shooting in the snow. The application example of the third comparative example not part of the invention provides a filter frame that can deal with such a demand.

The application example of the third comparative example not part of the invention provides a digital camera filter frame wherein a contact section 34 for the lens-retaining inward protrusion section that forms a circumferential edge section, and a contact section 35 for the lens-retaining ring are formed on the lens-retaining inward protrusion section 19 (see FIG. 9A) of the filter frame main body 3, and the contact section of the lens-retaining ring 28 (see FIG. 9B) with the filter lens 4, respectively, an irregular streak-like protrusion 36 that is formed along the circumferential direction is provided to the contact section 34 for the lens-retaining inward protrusion section and the contact section 35 for the lens-retaining ring, and the irregular streak-like protrusions 36 hold the filter lens 4 (not illustrated in FIGS. 9A and 9B) when the lens-retaining ring 28 is pressure-welded to the lens-retaining inward protrusion section 19 by ultrasonic welding to improve water-tightness between the lens-retaining ring 28 and the filter lens 4, and between the filter lens 4 and the lens-retaining inward protrusion section 19. It is thus provided a ring-like filter frame main body that is produced by molding a thermoplastic resin or a composite resin (e.g., fiber-reinforced plastic) having moderate elasticity, a filter lens having a specific effect being fitted to the ring-like filter frame main body. It is also provided a digital camera filter frame that is formed in the shape of a ring-like filter frame main body by molding a thermoplastic resin or a composite resin (e.g., fiber-reinforced plastic) having moderate elasticity, wherein the lens-retaining inward protrusion section and the lens fitting section are formed on the inner surface of the ring-like filter frame main body, the filter lens is fitted to the lens-retaining inward protrusion section from the back side so that the circumferential edge of the filter lens comes in contact with the lens-retaining inward protrusion section, and the lens-retaining ring is fitted to the back side of the filter lens, and can be pressure-welded to the edge area of the lens fitting section by ultrasonic welding, wherein the filter lens is secured on the ring-like filter frame main body via the lens-retaining inward protrusion section and the lens-retaining ring.. The ring-like filter frame main body and the digital camera filter frame can reduce the weight of a filter that is fitted to the front side of the lens barrel of a digital camera as compared with a known filter frame produced using a metal material (e.g., aluminum), and can significantly reduce the load imposed on an autofocus motor provided in the main body of the digital camera.

Since the ring-like filter frame is produced by molding a thermoplastic resin or a composite resin that utilizes a synthetic resin (e.g., fiber-reinforced plastic), and the filter frame main body is produced using a thermoplastic resin or the like having relatively high elasticity, an impact suffered by the ring-like filter frame fitted to the front side of the lens barrel of the digital camera when the filter frame collides with something hard can be buffered by the elasticity of the filter frame (i.e., is not transmitted to the lens barrel), and a situation in which the optical axis of the lens barrel varies can be prevented.It is also provided a digital camera filter frame wherein a contact section that forms a circumferential edge section is respectively formed on the lens-retaining inward protrusion section formed on the filter frame main body and the contact section of the lens-retaining ring with the filter lens, the irregular streak-like protrusion that is formed along the circumferential direction is provided to each contact section, and the irregular streak-like protrusions hold the filter lens when the lens-retaining ring is pressure-welded to the lens-retaining inward protrusion section by ultrasonic welding to improve water-tightness between the lens-retaining ring and the filter lens, and between the filter lens and the lens-retaining inward protrusion section.

Since the filter frame is produced by molding a thermoplastic resin or a composite resin that utilizes a synthetic resin (e.g., fiber-reinforced plastic) having moderate elasticity, the filter frame can be mass-produced, and the production cost can be significantly reduced.

### REFERENCE SIGNS LIST

- 1: Main body of digital single-lens reflex camera
- 2: Lens barrel
- 3: Filter frame main body
- 4: Filter lens
- 5: Female thread
- 6: Lens-retaining inward protrusion section
- 7: Lens fitting section
- 8: Circumferential edge
- 9: Male thread
- 10: Female thread part
- 11: Filter outer frame
- 12: Filter lens-retaining inward protrusion section
- 13: Filter lens
- 14: Filter-retaining ring
- 15: Optical axis of filter lens
- 16: Front side
- 17: Back side
- 18: Female thread
- 19: Lens-retaining inward protrusion section
- 20: Lens fitting section
- 21: Lens-retaining ring
- 22: Male thread
- 23: Circumferential edge
- 24: Burr groove
- 25: Welding ring fitting groove
- 26: Welding ring
- 27: Welding allowance
- 28: Lens-retaining ring
- 29: Welding ring fitting groove
- 30: Burr groove provided in outer circumference of welding ring fitting groove
- 31: Welding ring
- 32: Welding allowance
- 33: Welding stopper
- 34: Contact section of lens-retaining inward protrusion section
- 35: Contact section of lens-retaining ring
- 36: Streak-like protrusion

## Claims

1. A digital camera filter frame fitted to a front side of a lens barrel (2) of a digital camera (1) to control light, the digital camera filter frame being **characterized by** comprising
a ring like filter frame main body (3) being produced by molding a polymer elastic body and having a male thread (22) to fit to the front side of the lens barrel (2) of the digital camera (1),
a filter lens (4) fitted to the ring-like filter frame main body (3), and
a lens-retaining ring (21) produced by molding a polymer elastic body and fitted to the filter lens (4), wherein
the ring-like filter frame main body (3) comprises a lens-retaining inward protrusion section (19) and a lens fitting section (20) for the filter lens (4) that are formed on an inner surface of the ring-like filter frame main body (3), wherein a welding ring fitting groove (25) is formed between the filter lens (4) and the lens fitting section (20), and wherein
the filter lens (4) is fitted to the lens-retaining inward protrusion section (19) so that a circumferential edge of the filter lens (4) comes in contact with the lens-retaining inward protrusion section (19), and wherein
a welding ring section (26) in the shape of a protrusion is formed on the lens-retaining ring (21), and wherein
the welding ring section (26) is fitted to the welding ring fitting groove (25), and wherein
the welding ring section (26) of the lens-retaining ring (21) is welded to the filter frame main body (3) by ultrasonic welding, wherein
an end of the welding ring section (26) is situated in a burr groove (24) formed in the peripheral edge section (23) of the lens fitting section (20).

2. The digital camera filter frame according to claim 1, wherein the ring-like filter frame main body (3) and the lens-retaining ring (21, 28) are produced by molding the polymer elastic body comprising a thermosetting resin, a thermoplastic resin, or a fiber-reinforced plastic that utilizes a synthetic resin.

## Patentansprüche

1. Filterrahmen für eine Digitalkamera, der an einer Vorderseite eines Objektivtubus (2) einer Digitalkamera (1) angesetzt wird, um Licht zu steuern, welcher Filterrahmen für eine Digitalkamera **dadurch gekennzeichnet ist, dass** er enthält:
einen ringartigen Filterrahmenhauptkörper (3), der durch Formen eines elastischen Polymerkörpers hergestellt wird und ein Außengewinde (22) hat, sodass er an die Vorderseite des Objektivtubus (2) der Digitalkamera (1) ansetzbar ist,
eine in den ringartigen Filterrahmenhauptkörper (3) eingesetzte Filterscheibe (4), und
einen Scheibenhaltering (21), der durch Formen eines elastischen Polymerkörpers hergestellt wird und an die Filterscheibe (4) angesetzt ist, wobei
der ringartige Filterrahmenhauptkörper (3) einen nach innen vorspringenden Scheibenhalteabschnitt (19) und einen Scheibeneinsetzabschnitt (20) für die Filterscheibe (4) aufweist, die an einer Innenfläche des ringartigen Filterrahmenhauptkörpers (3) gebildet sind, wobei eine Schweißringeinsetznut (25) zwischen der Filterscheibe (4) und dem Scheibeneinsetzabschnitt (20) gebildet ist, und wobei
die Filterscheibe (4) dergestalt in den nach innen vorspringenden Scheiben Halteabschnitt (19) eingesetzt ist, dass ein Umfangsrand der Filterscheibe (4) mit dem nach innen vorspringenden Scheibenhalteabschnitt (19) in Kontakt kommt, und wobei
ein Schweißringabschnitt (26) in Form eines Vorsprungs an dem Scheibenhaltering (21) gebildet ist, und wobei
der Schweißringabschnitt (26) in die Schweißringeinsetznut (25) eingesetzt wird, und wobei
der Schweißringabschnitt (26) des Scheibenhalterings (21) mit dem Filterrahmenhauptkörper (3) durch Ultraschallschweißen verschweißt ist, wobei
ein Ende des Schweißringabschnitts (26) in einer in dem Umfangsrandabschnitt (23) des Scheibeneinsetzabschnitts (20) gebildeten Falznut (24) gelegen ist.

2. Filterrahmen für eine Digitalkamera nach Anspruch 1, wobei der ringartige Filterrahmenhauptkörper (3) und der Scheibenhaltering (21, 28) durch Formen des elastischen Polymerkörpers gebildet werden, der ein duroplastisches Harz, ein thermoplastisches Harz oder einen faserverstärkten Kunststoff, der ein Kunstharz verwendet, umfasst.

## Revendications

1. Cadre de filtre pour appareil photo numérique placé sur un côté avant d'un tube de lentille (2) d'un appareil photo numérique (1) afin de contrôler la lumière, le cadre de filtre d'appareil photo numérique étant **caractérisé en ce qu'**il comprend
un corps principal de cadre de filtre en forme de bague (3) fabriqué en moulant un corps élastique en polymère et ayant un filetage mâle (22) destiné à se placer dans le côté avant du tube de lentille (2) de l'appareil photo numérique (1),
une lentille de filtre (4) placée sur le corps principal de cadre de filtre en forme de bague (3), et
une bague de retenue de lentille (21) fabriquée en moulant un corps élastique en polymère et placée sur la lentille de filtre (4), dans lequel
le corps principal de cadre de filtre en forme de bague (3) comprend une section de retenue de lentille qui dépasse vers l'intérieur (19) et une section de fixation de lentille (20) pour la lentille de filtre (4), qui sont formées sur une surface intérieure du corps principal de cadre de filtre en forme de bague (3), une rainure de placement de bague de soudage (25) étant formée entre la lentille de filtre (4) et la section de placement de lentille (20), et dans lequel
la lentille de filtre (4) est placée sur la section de retenue de lentille en saillie vers l'intérieur (19) de sorte qu'un bord circonférentiel de la lentille de filtre (4) entre en contact avec la section de retenue de lentille en saillie vers l'intérieur (19), et dans lequel
une section de bague de soudage (26) en forme de saillie est formée sur la bague de retenue de lentille (21), et dans lequel
la section de bague de soudage (26) est placée sur la rainure de placement de bague de soudage (25), et dans lequel
la section de bague de soudage (26) de la bague de retenue de lentille (21) est soudée sur le corps principal de cadre de filtre (3) par soudage à ultrasons, dans lequel une extrémité de la section de bague de soudage (26) est située dans une rainure ébavurée (24) formée dans la section de bord périphérique (23) de la section de fixation de lentille (20).

2. Cadre de filtre pour appareil photo numérique selon la revendication 1, dans lequel le corps principal de cadre de filtre en forme de bague (3) et la bague de retenue de lentille (21, 28) sont fabriqués en moulant le corps élastique en polymère comprenant une résine thermodurcissable, une résine thermoplastique, ou un plastique renforcé par des fibres qui utilise une résine synthétique.
